# EUROPEAN PATENT APPLICATION

(11) **EP 3 975 537 A1**
(43) Date of publication of application: **30.03.2022**
(21) Application number: 20815599.4
(22) Date of filing: 21.04.2020
(51) Int. Cl.: H04N 5/225, H04N 5/232

(54) **IMAGE ACQUISITION METHOD, IMAGE ACQUISITION DEVICE, ELECTRONIC DEVICE AND READABLE STORAGE MEDIUM**

(30) Priority: 24.05.2019 CN 201910437665
(71) Applicant: GUANGDONG OPPO MOBILE TELECOMMUNICATIONS CORP., LTD., Wusha, Chang'an Dongguan Guangdong 523860 (CN)
(72) Inventor: XU, Naijiang, Dongguan, Guangdong 523860 (CN)
(74) Representative: Manitz Finsterwald Patent- und Rechtsanwaltspartnerschaft mbB
(86) International application number: PCT/CN2020/085783
(87) International publication number: WO 2020/238481

(57) **Abstract**

Provided are an image acquisition method, an image acquisition device (90), an electronic device (100), and a readable storage medium. The image acquisition method comprises: projecting laser to a scene at a first working frequency; acquiring collected images at a second working frequency which is greater than the first working frequency; distinguishing from the collected images a first image collected when the laser projector does not project the laser and a second image collected when the laser projector projects the laser; and calculating a depth image based on the first image, the second image and a reference image.

## Description

### PRIORITY INFORMATION

This application claims priority to and benefits of Chinese Patent Application No. 201910437665.1, filed with the China National Intellectual Property Administration on May 24, 2019, the entire content of which is incorporated herein by reference.

### TECHNICAL FIELD

The disclosure relates to a field of imaging technologies, and particularly to a method and an apparatus for acquiring an image, an electronic device and a non-transitory computer readable storage medium.

### BACKGROUND

The depth information of a scene is acquired by a depth camera projecting a laser pattern with speckles to the scene. Specifically, the depth camera projects an infrared laser that forms a speckle pattern (for example, a 940 nm infrared laser) to the scene and acquires the speckle pattern formed by reflection of objects in the scene so as to acquire depth information of the objects in the scene. However, if the depth camera is used in a scene with a relatively high brightness, for example, the depth camera is used in an outdoor scene with a strong sunlight, where the ambient light contains a large amount of 940 nm infrared lights and the infrared lights may thus go into the depth camera for imaging, the brightness of speckle pattern imaging is caused close to the brightness of ambient infrared light imaging, and the algorithm cannot distinguish laser speckles, resulting in matching failure of the laser speckles and missing a part or all of depth information.

### SUMMARY

Embodiments of the disclosure provide a method and an apparatus for acquiring an image, an electronic device and a non-transitory computer readable storage medium.

The method for acquiring an image in embodiments of the disclosure is applied to an electronic device. The electronic device includes a depth camera, and the depth camera includes a laser projector. The method for acquiring an image includes: projecting, at a first frequency, a laser to a scene; acquiring, at a second working frequency greater than the first working frequency, images; distinguishing a first image acquired when the laser projector does not project the laser and a second image acquired when the laser projector projects the laser from the acquired images; and calculating a depth image based on the first image, the second image and a reference image.

The apparatus for acquiring an image in embodiments of the disclosure is applied to an electronic device. The electronic device includes a depth camera, and the depth camera includes a laser projector. The apparatus for acquiring an image includes a projection module, a first acquiring module, a distinguishing module and a calculating module. The projection module is configured to project, at a first frequency, a laser to a scene. The first acquiring module is configured to acquire, at a second working frequency greater than the first working frequency, images. The distinguishing module is configured to distinguish a first image acquired when the laser projector does not project the laser and a second image acquired when the laser projector projects the laser from the acquired images. The calculating module is configured to calculate a depth image based on the first image, the second image and a reference image.

The electronic device in embodiments of the disclosure includes a depth camera and a processor. The depth camera includes a laser projector and an image collector. The laser projector is configured to project, at a first frequency, a laser to a scene. The image collector is configured to acquire, at a second working frequency greater than the first working frequency, images. The processor is configured to distinguish a first image acquired when the laser projector does not project the laser and a second image acquired when the laser projector projects the laser from the acquired images; and calculate a depth image based on the first image, the second image and a reference image.

A non-transitory computer readable storage medium has computer readable instructions in embodiments of the disclosure, and when the instructions are executed by a processor, the processor is caused to execute the above method for acquiring an image.

With the method and the apparatus for acquiring an image, the electronic device and the non-transitory computer readable storage medium in embodiments of the disclosure, the laser projector and the image collector work at different working frequencies, the image collector may acquire the first image formed only by ambient infrared lights, and the second image formed of both the ambient infrared lights and the infrared laser projected by the laser projector, an image part of the second image formed of the ambient infrared lights is removed based on the first image, so that laser speckles may be distinguished, a depth image may be calculated from the acquired image formed only of the infrared laser projected by the laser projector, and laser speckle matching may not be affected, which may avoid missing a part or all of depth information and improve the accuracy of the depth image.

Additional aspects and advantages of embodiments of the disclosure will be set forth in part in the following descriptions, become apparent in part from the following descriptions, or may be learned from the practice of the disclosure.

### BRIEF DESCRIPTION OF THE DRAWINGS

The above and/or additional aspects and advantages of the disclosure may become apparent and easily understood in descriptions of embodiments in combination with the drawings, in which:
FIG. 1 and FIG. 2 are structural schematic diagrams illustrating an electronic device in some embodiments of the disclosure.
FIG. 3 is a schematic diagram illustrating a system architecture of an electronic device in some embodiments of the disclosure.
FIG. 4 is a flowchart illustrating a method for acquiring an image in some embodiments of the disclosure.
FIG. 5 is a schematic diagram illustrating modules of an apparatus for acquiring an image in some embodiments of the disclosure.
FIG. 6 is a schematic diagram illustrating the principle of a method for acquiring an image in some embodiments of the disclosure.
FIG. 7 to FIG. 10 are flowcharts illustrating a method for acquiring an image in some embodiments of the disclosure.
FIG. 11 is a schematic diagram illustrating modules of an apparatus for acquiring an image in some embodiments of the disclosure.
FIG. 12 is a schematic diagram illustrating the principle of a method for acquiring an image in some embodiments of the disclosure.
FIG. 13 is a flowchart illustrating a method for acquiring an image in some embodiments of the disclosure.
FIG. 14 is a schematic diagram illustrating modules of an apparatus for acquiring an image in some embodiments of the disclosure.
FIG. 15 is a schematic diagram illustrating interaction between a non-transitory computer readable storage medium and a processor in some embodiments of the disclosure.

### DETAILED DESCRIPTION

Embodiments of the present disclosure are described in detail below, examples of which are illustrated in the accompanying drawings, in which the same or similar reference numerals represent the same or similar elements or elements with the same or similar functions. The embodiments described below with reference to the drawings are explanatory, are only configured to explain the embodiments of the disclosure and are not to be construed as a limitation of embodiments of the disclosure.

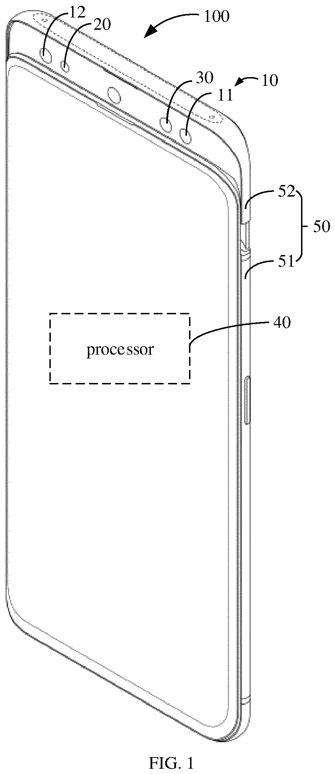

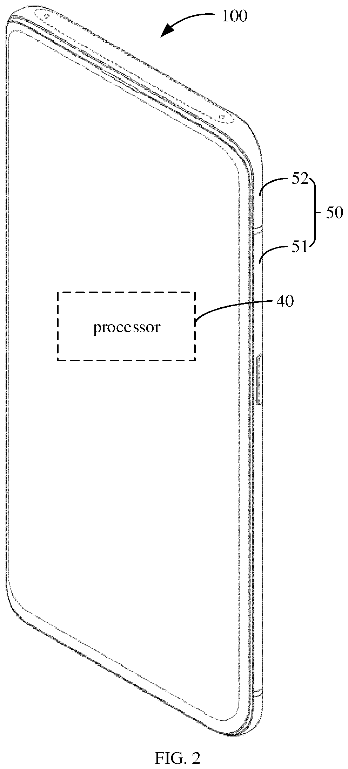

Referring to FIG. 1 to FIG. 3, the disclosure provides an electronic device 100. The electronic device 100 may be a mobile phone, a tablet computer, a laptop, a smart wearable device (a smart watch, a smart bracelet, a smart helmet, smart glasses, etc.), a virtual reality device, etc. The disclosure takes the electronic device 100 being a mobile phone as an example, however, the form of the electronic device 100 is not limited to the mobile phone. The electronic device 100 includes a depth camera 10, a visible light camera 30, a processor 40 and a housing 50.

The processor 40 is contained in the housing 50. The depth camera 10 and the visible light camera 30 are mounted on the housing 50. In an example, the housing 50 includes a body 51 and a movable support 52. The movable support 52 may be driven by a driving device to move relative to the body 51, for example, the movable support 52 may slide relative to the body 51, sliding in or out of the body 51. The depth camera 10 and the visible light camera 30 may be mounted on the movable support 52. The movable support 52 moves to drive the depth camera 10 and the visible light camera 30 to retract into or stretch out of the body 51. One or more acquisition windows are opened on the housing 50, e.g., may be opened on the front or back of the housing 50. The depth camera 10 and the visible light camera 30 are mounted in alignment with the acquisition windows to enable the depth camera 10 and the visible light camera 30 to receive lights incident from the acquisition windows. When the user needs to use any one of the depth camera 10 and the visible light camera 30, the movable support 52 may be triggered to slide out of the body 51 to drive the depth camera 10 and the visible light camera 30 to stretch out of the body 51; when the user does not need to use the depth camera 10 or the visible light camera 30, the movable support 52 may be triggered to slide in the body 51 to drive the depth camera 10 and the visible light camera 30 to retract into the body 51. In another example, one or more through holes are opened on the housing 50, and the depth camera 10 and the visible light camera 30 are mounted in the housing 50 in alignment with the through holes. The through holes may be opened on the front or back of the housing 50, and the depth camera 10 and the visible light camera 30 may receive the lights passing through the through holes.

The depth camera 10 includes a laser projector 11 and an image collector 12. The laser projector 11 may project a laser, and the laser projector 11 includes a laser source 111 and a first driver 112. The first driver 111 may be configured to drive the laser source 111 to project a laser, and the laser may be an infrared laser or other invisible light, such as an ultraviolet laser. The image collector 12 may receive the laser reflected back by an object. The disclosure takes the laser being an infrared laser and the image collector 12 being an infrared camera as an example, however, the form of the laser and the image collector 12 is not limited here, for example, the laser may further be an ultraviolet laser, and the image collector 12 may be an ultraviolet light camera. The laser projector 11 and the image collector 12 are connected to the processor 40. The processor 40 may provide enable signals for the laser projector 11 and specifically, the processor 40 may provide enable signals for the first driver 112. The image collector 12 is connected to the processor 40 via an I2C bus. In an example, when the image collector 12 is used cooperatively with the laser projector 11, the image collector 12 may control a projection timing of the laser projector 11 by strobe signals, in which, the strobe signals are generated based on the timing of acquiring images by the image collector 12, and the strobe signals may be regarded as electrical signals with alternate high and low levels, and the laser projector 11 projects the laser based on the laser projection timing indicated by the strobe signals. Specifically, the processor 40 may send an image acquisition instruction via an I2C bus to enable the depth camera 10 to work, the image collector 12 receives the image acquisition instruction and controls a switching device 61 through the strobe signals. When the strobe signal is high, the switching device 61 sends a first pulse signal (pwn1) to the first driver 112, and the first driver 112 drives the laser source 111 to project the laser to a scene based on the first pulse signal, and when the strobe signal is low, the switching device 61 stops sending the first pulse signal to the first driver 112, and the laser source 111 does not project the laser. Alternatively, when the strobe signal is low, the switching device 61 sends the first pulse signal to the first driver 112 and the first driver 112 drives the laser source 111 to project the laser to a scene based on the first pulse signal, and when the strobe signal is high, the switching device 61 stops sending the first pulse signal to the first driver 112, and the laser source 111 does not project the laser. In another example, when the image collector 12 is cooperated with the laser projector 11 without the strobe signals. At this time, the processor 40 sends an image acquisition instruction to the image collector 12 and simultaneously sends the laser projection instruction to the first driver 112. The image collector 12 receives the image acquisition instruction and starts to acquire images. The first driver 112 receives the laser projection instruction and drives the laser source 111 to project the laser. When the laser projector 11 projects the laser, a laser pattern with speckles formed of the laser is projected to objects in the scene. The image collector 12 acquires the laser pattern reflected by the objects to obtain a speckle image, and sends the speckle image to the processor 40 through a mobile industry processor interface (MIPI). Each time the image collector 12 sends a frame of speckle image to the processor 40, the processor may receive a data stream. The processor 40 may calculate a depth image based on the speckle image and the reference image pre-stored in the processor 40.

The visible light camera 30 is also connected to the processor 40 via an I2C bus. The visible light camera 30 may be configured to acquire visible light images. Each time the visible light camera 30 sends a frame of visible light image to the processor 40, the processor 40 may receive a data stream. When the visible light camera 30 is used separately, that is, when the user only wants to acquire visible light images, the processor 40 sends an image acquisition instruction to the visible light camera 30 via the I2C bus to enable the visible light camera 30 to work. The visible light camera 30 receives the image acquisition instruction, acquires visible light images of the scene and sends the visible light image to the processor 40 through the MIPI. When the visible light camera 30 is used cooperatively with the depth camera 10, that is, when the user wants to acquire a three-dimensional image from the depth image and the visible light image, if the working frequency of the image collector 12 is the same as the working frequency of the visible light camera 30, the image collector 12 and the visible light camera 30 achieve hardware synchronization through sync signals. Specifically, the processor 40 sends an image acquisition instruction to the image collector 12 via an I2C bus. the image collector 12 receives an image acquisition instruction, controls the switching device 61 through the strobe signals to send a first pulse signal (pwn1) to the first driver 112, so that the first driver 112 drives the laser source 111 to emit a laser based on the first pulse signal; meanwhile, the image collector 12 and the visible light camera 30 are synchronized through the sync signals, and the sync signals control the visible light camera 30 to acquire visible light images.

The electronic device 100 further includes a floodlight 20. The floodlight 20 may emit a uniform surface light to a scene, the floodlight 20 includes a flood light source 21 and a second driver 22, and the second driver 22 may be configured to drive the flood light source 21 to emit the uniform surface light. The light emitted by the floodlight 20 may be an infrared light or other invisible light, such as an ultraviolet light. The disclosure takes the floodlight 20 emitting an infrared light as an example, however, the form of light emitted by the floodlight 20 is not limited here. The floodlight 20 is connected to the processor 40, and the processor may provide enable signals for the floodlight 20. Specifically, the processor 40 may provide enable lights for the second driver 22. The floodlight 20 may be used cooperatively with the image collector 12 to acquire an infrared image. In an example, when the image collector 12 is used cooperatively with the floodlight 20, the image collector 12 may control an emission timing of the floodlight 12 emitting infrared lights through strobe signals (which are independent from the strobe signals of the image collector 12 controlling the laser projector 11). The strobe signals here are generated based on the timing of the image collector 12 acquiring images, and the strobe signals may be regarded as electrical signals with alternate high and low levels, and the floodlight 20 emits an infrared light based on the emission timing of an infrared light indicated by the strobe signals. Specifically, the processor 40 may send an image acquisition instruction to the image collector 12 via an I2C bus. The image collector 12 receives the image acquisition instruction and controls a switching device 61 through the strobe signals. When the strobe signal is high, the switching device 61 sends a second pulse signal (pwn2) to the second driver 22, and the second driver 22 controls the flood light source 21 to emit an infrared light based on the second pulse signal, and when the strobe signal is low, the switching device 61 stops sending the second pulse signal to the second driver 22, and the flood light source 21 does not emit an infrared light. Alternatively, when the strobe signal is low, the switching device 61 sends a second pulse signal to the second driver 22 and the second driver 22 controls the flood light source 21 to emit an infrared light based on the second pulse signal, and when the strobe signal is high, the switching device 61 stops sending the second pulse signal to the second driver 22, and the flood light source 21 does not emit an infrared light. When the flood light source 21 emits an infrared light, the image collector 12 receives the infrared light reflected by the objects in the scene to form an infrared image and sends the infrared image to the processor 40 through the MIPI. Each time the image collector 12 sends a frame of infrared image to the processor 40, the processor 40 may receive a data stream. The infrared image is commonly configured for iris recognition, face recognition, etc.

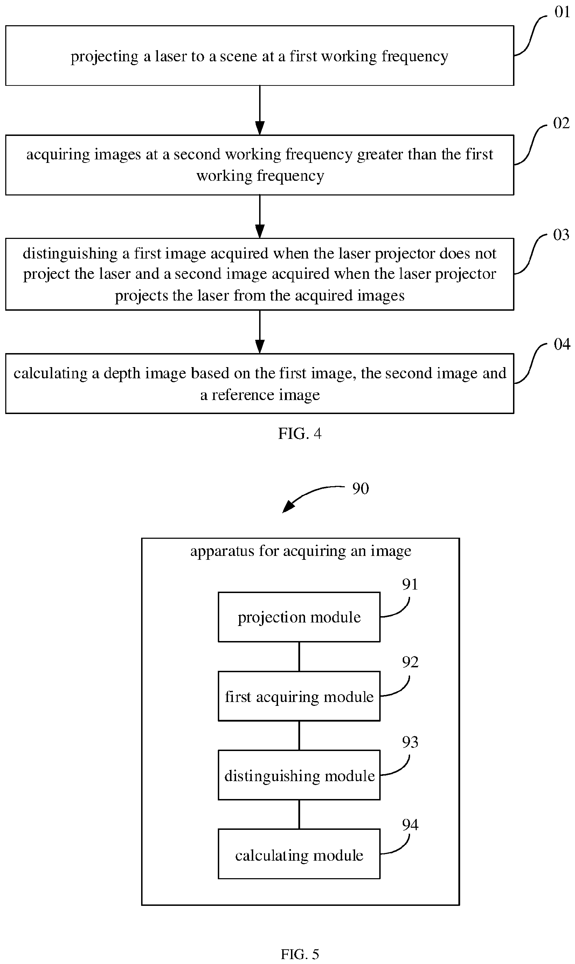

Referring to FIG. 4, the disclosure further provides a method for acquiring an image applied to an electronic device 100 in embodiments of FIGS 1-3. The method for acquiring an image includes:
01: a laser is projected to a scene at a first working frequency;
02: images are acquired at a second working frequency greater than the first working frequency;
03: a first image acquired when the laser projector does not project the laser is distinguished and a second image acquired when the laser projector projects the laser from the acquired images; and
04: a depth image is calculated based on the first image, the second image and a reference image.

Referring to FIG. 5, the disclosure further provides an apparatus 90 for acquiring an image applied to an electronic device 100 in embodiments of FIGS 1-3. The method for acquiring an image may be implemented by the apparatus 90 for acquiring an image in the disclosure. The apparatus 90 for acquiring an image includes a projection module 91, a first acquiring module 92, a distinguishing module 93 and a calculating module 94. Block 01 may be implemented by the projection module 91. Block 02 may be implemented by the first acquiring module 92. Block 03 may be implemented by the distinguishing module 93. Block 04 may be implemented by the calculating module 94. That is, the projection module 91 may be configured to project, at a first frequency, a laser to a scene. The first acquiring module 92 may be configured to acquire, at a second working frequency greater than the first working frequency, images. The distinguishing module 93 may be configured to distinguish a first image acquired when the laser projector does not project the laser and a second image acquired when the laser projector projects the laser from the acquired images. The calculating module 94 may be configured to calculate a depth image based on the first image, the second image and a reference image. At this time, the projection module 91 is the laser projector 11, and the first acquiring module 92 is the image collector 12.

Referring to FIG. 1, the method for acquiring an image in the disclosure may be further implemented by an electronic device 100. Block 01 may be implemented by the laser projector 11. Block 02 may be implemented by the image collector 12. Block 03 and block 04 may be implemented by the processor 40. That is, the laser projector 11 may be configured to project, at a first frequency, a laser to a scene. The image collector 12 may be configured to acquire, at a second working frequency greater than the first working frequency, images. The processor 40 may be configured to distinguish a first image acquired when the laser projector 11 does not project the laser and a second image acquired when the laser projector 11 projects the laser from the acquired images, and calculate a depth image based on the first image, the second image and a reference image.

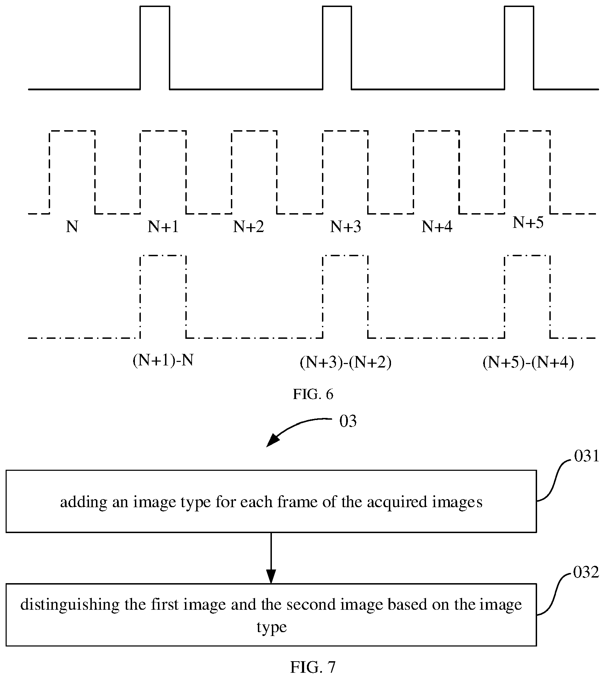

Specifically, when the working frequency of the image collector 12 is different from the working frequency of the laser projector 11 (i.e. the second working frequency is greater than the first operating frequency), if a depth image needs to be acquired, in usage scenes such as unlocking, payment, decryption, three-dimensional modeling, in an example, the processor 40 sends an image acquisition instruction for acquiring a depth image to both the image collector 12 and the first driver 112 simultaneously via the I2C bus. The first driver 112 receives the image acquisition instruction and drives the laser source 111 to emit infrared laser to a scene at the first working frequency; and the image collector 12 receives the image acquisition instruction and acquires at the second working frequency the infrared laser reflected by the objects in the scene to obtain the acquired images. For example, as illustrated in FIG. 6, a solid line represents a timing of emitting a laser by the laser projector 11, a dotted line represents a timing of acquiring images by the image collector 12 and a number of frames of the acquired images, a dot dash line represents a number of frames of acquiring a third image based on the first image and the second image. In FIG. 6, the solid line, the dotted line and the dot dash line are shown from top to bottom in sequence, the second working frequency being twice the first working frequency. Referring to solid line and dotted line parts in FIG. 6, the image collector 12 first receives infrared lights in the environment (hereinafter referred to as ambient infrared lights) when the laser projector 11 does not project the laser to acquire an Nth frame of acquired image (at this time, a first image, may also be referred to as a background image), and sends the Nth frame of the acquired image to the processor 40 through the MIPI; subsequently, the image collector 12 may receive both the ambient infrared lights and infrared laser emitted by the laser projector 11 when the laser projector 11 projects the laser to acquire an (N+1)th frame of the acquired image (at this time, a second image, may also be referred to as an interference speckle image) ) and sends the (N+1)th frame of the acquired image to the processor 40 through the MIPI; subsequently, the image collector 12 receives ambient infrared lights when the laser projector 11 does not project the laser to acquire an (N+2)th frame of acquired image (at this time, a first image), and sends the (N+2)th frame of acquired image to the processor 40 through the MIPI, and so on, the image collector 12 alternately acquires the first image and the second image.

In another example, the processor 40 sends an acquisition instruction for acquiring a depth image to the image collector 12 via an I2C bus. The image collector 12 receives the image acquisition instruction, and controls the switching device through the strobe signals to send the first pulse signal to the first driver 112, so that the first driver 112 drives the laser source 111 to project a laser at the first working frequency based on the first pulse signal (that is, a laser projector 11 projects a laser at the first working frequency), while the image collector 12 acquires at the second working frequency the infrared laser reflected by the objects in the scene to obtain the acquired images. As illustrated in FIG. 6, a solid line represents a timing of emitting a laser by the laser projector 11, a dotted line represents a timing of acquiring images by the image collector 12 and a number of frames of the acquired images, a dot dash line represents a number of frames of acquiring a third image based on the first image and the second image. In FIG. 6, the solid line, the dotted line and the dot dash line are shown from top to bottom in sequence, the second working frequency being twice the first working frequency. Referring to solid line and dotted line parts in FIG. 6, the image collector 12 first receives ambient infrared lights when the laser projector 11 does not project the laser to acquire an Nth frame of acquired image (at this time, a first image, may also be referred to as a background image), and sends the Nth frame of the acquired image to the processor 40 through the MIPI; subsequently, the image collector 12 may receive both ambient infrared lights and infrared laser emitted by the laser projector 11 when the laser projector 11 projects the laser to acquire an (N+1)th frame of the acquired image (at this time, a second image, also referred to as an interference speckle image) ) and sends the (N+1)th frame of the acquired image to the processor 40 through the MIPI; subsequently, the image collector 12 receives ambient infrared lights when the laser projector 11 does not project the laser to acquire an (N+2)th frame of the acquired image (at this time, a first image), and sends the (N+2)th frame of the acquired image to the processor 40 through the MIPI, and so on, the image collector 12 alternately acquires the first image and the second image.

It needs to be noted that, the image collector 12 may simultaneously acquire images during the process of sending the acquired images to the processor 40. And, the image collector 12 may first acquire a second image, and then acquire a first image, and execute the acquisition of images alternately according to the sequence. In addition, a multiple relationship between the second working frequency and the first working frequency is merely an example, and in other embodiments, the multiple relationship between the second working frequency and the first working frequency may further be triple, quadruple, quintuple, sextuple, etc.

Each time the processor 40 receives a frame of the acquired image, the processor 40 may distinguish the acquired image received to determine whether the acquired image is a first image or a second image. After the processor 40 receives at least one frame of first image and at least one frame of second image, a depth image may be calculated based on the first image, the second image and a reference image. Specifically, since the first image is acquired when the laser projector 11 does not project a laser, the lights forming the first image only include ambient infrared lights, and since the second image is acquired when the laser projector 11 projects a laser, the lights forming the second image include both the ambient infrared lights and the infrared laser emitted by the laser projector 11, the processor 40 may remove a portion of the acquired image formed of the ambient infrared lights in the second image based on the first image, thereby acquiring images only formed of the infrared laser (i.e., the speckle image formed of the infrared laser).

It may be understood that, ambient lights include infrared lights with the same wavelength as the infrared laser emitted by the laser projector 11 (for example, containing a 940 nm ambient infrared light). When the image collector 12 acquires images, this portion of infrared lights may also be received by the image collector 12. When the brightness of the scene is high, the proportion of ambient infrared lights in the received lights from the image collector 12 may be increased, causing the laser speckles in the image to be not obvious, and affecting the calculation of the depth image.

The method for acquiring an image in the disclosure controls the laser projector 11 and the image collector 12 to work at different working frequencies, and the image collector 12 may acquire the first image formed only of the ambient infrared lights and the second image formed of both the ambient infrared lights and the infrared laser projected by the laser projector 11, an image part of the second image formed of the ambient infrared lights is removed based on the first image, so that laser speckles may be distinguished, a depth image may be calculated from the acquired image formed only of the infrared laser projected by the laser projector 11, and laser speckle matching may not be affected, which may avoid missing a part or all of depth information and improve the accuracy of the depth image.

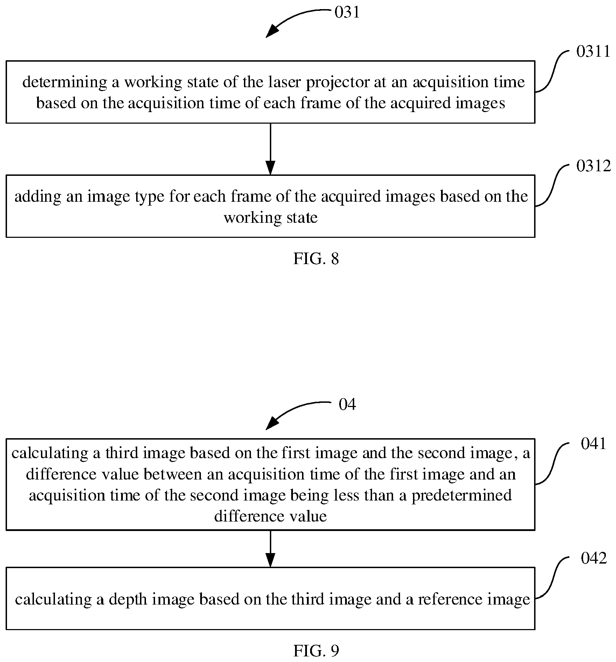

Referring to FIG. 7 and FIG. 8, in some embodiments, block 03 includes:
031: an image type is added for each frame of the acquired image; and
032: the first image is distinguished from the second image based on the image type.

Block 031 includes:
0311: a working state of the laser projector 12 at an acquisition time is determined based on the acquisition time of each frame of the acquired image; and
0312: an image type is added for each frame of the acquired image based on the working state.

Referring to FIG. 5, in some embodiments, block 031, block 032, block 0311 and block 0312 may be implemented by the distinguishing module 93. That is, the distinguishing module 93 may be further configured to add the image type for each frame of the acquired image and distinguish the first image from the second image based on the image type. When the image type is added for each frame of the acquired image, the distinguishing module 93 is specifically configured to determine a working state of the laser projector 11 at an acquisition time based on the acquisition time of each frame of the acquired image and add the image type for each frame of the acquired image based on the working state.

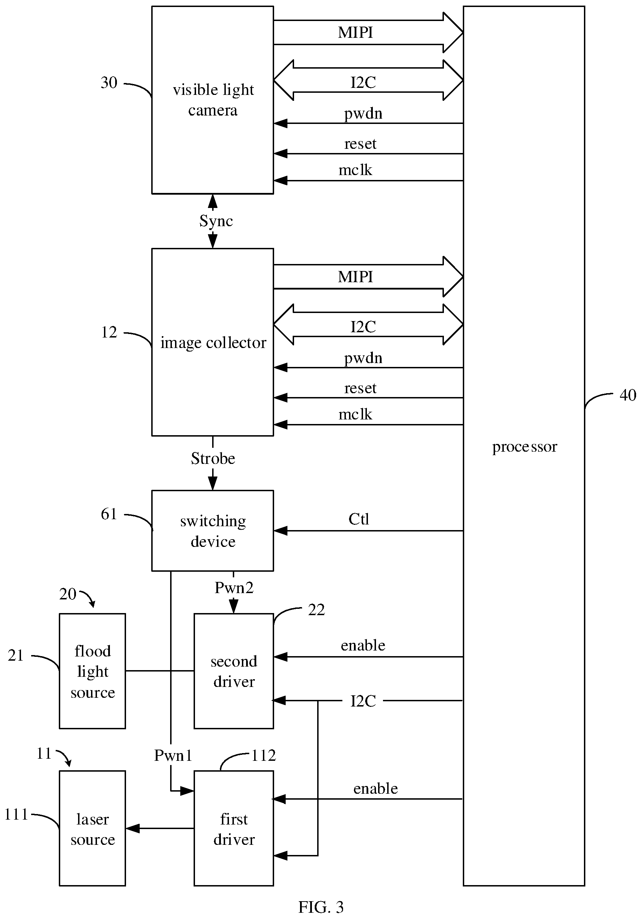

Referring to FIG. 3, in some embodiments, block 031, block 032, block 0311 and block 0312 may be implemented by the processor 40. That is, the processor 40 may be further configured to add the image type for each frame of the acquired image and distinguish the first image from the second image based on the image type. When the image type is added for each frame of the acquired image, the processor 40 is specifically configured to determine a working state of the laser projector 11 at an acquisition time based on the acquisition time of each frame of the acquired image and add the image type for each frame of the acquired image based on the working state.

Specifically, each time the processor 40 receives a frame of the acquired image from the image collector 12, the processor 40 may add an image type (stream_type) for the acquired image in order to facilitate to distinguish the first image and the second image based on the image type in the subsequent processing. Specifically, during the acquisition of images by the image collector 12, the processor 40 may monitor the working state of the laser projector 11 in real time via the I2C bus. Each time the processor 40 receives a frame of the acquired image from the image collector 12, the processor 40 first acquires an acquisition time of the acquired image, and determines whether the working state of the laser projector 11 at the acquisition time of the acquired image is projecting a laser or not projecting a laser based on the acquisition time of the acquired image, and adds an image type for the acquired image based on the determination result. The acquisition time of the acquired image may be a start time, an end time, any time between the start time and the end time when the image collector 12 acquires each frame of the acquired image, etc. In this way, it may be achieved that each frame of the acquired image corresponds to the working state of the laser projector 11 (projecting a laser or not projecting a laser) during the process of obtaining each frame of the acquired image, and the type of the acquired image may be thus accurately distinguished. In an example, the structure of the image type (stream_type) is illustrated in Table 1:

**Table 1**

| stream_type | | |
|---|---|---|
| stream | light | |
| 0 | 0 | 0 |
| 0 | 0 | 1 |

When stream in Table 1 is 0, it indicates the data stream at this time is images formed of the infrared lights and/or infrared laser. When light is 00, it indicates the data stream at this time is acquired without any device projecting infrared lights and/or infrared laser (acquired with only ambient infrared lights). The processor 40 may add the image type 000 for the acquired image to identify the acquired image as the first image. When light is 01, it indicates the data stream at this time is acquired when the laser projector 11 projects infrared laser (acquired under both ambient infrared lights and infrared laser). The processor 40 may add the image type 001 for the acquired image to identify the acquired image as the second image. The processor 40 may distinguish the image type of the acquired image based on the value of stream _ type, subsequently.

Referring to FIG. 9, in some embodiments, block 04 includes:
041: a third image is calculated based on the first image and the second image, a difference value between an acquisition time of the first image and an acquisition time of the second image being less than a predetermined difference value; and
042: a depth image is calculated based on the third image and a reference image.

Referring to FIG. 5, in some embodiments, block 041 and block 042 may be implemented by the calculating module 94. That is, the calculating module 94 may be configured to calculate the third image based on the first image and the second image and calculate the depth image based on the third image and the reference image. The difference value between the acquisition time of the first image and the acquisition time of the second image is less than the predetermined difference value.

Referring to FIG. 3, in some embodiments, block 041 and block 042 may be implemented by the calculating module 94. That is, the processor 40 may be further configured to calculate the third image based on the first image and the second image and calculate the depth image based on the third image and the reference image. The difference value between the acquisition time of the first image and the acquisition time of the second image is less than the predetermined difference value.

In the process of calculating the depth image, the processor 40 may first distinguish the first image from the second image, and select any frame of the second image and a particular frame of the first image corresponding to the any frame of the second image based on the acquisition time, in which the difference value between the acquisition time of the particular frame of the first image and the acquisition time of the any frame of the second image is less than the predetermined difference value. Then, the processor 40 calculates the third image based on the particular frame of the first image and the any frame of the second image. That is, the third image is an acquired image formed only by the infrared laser emitted by the laser projector 11, which may be also referred to as an actual speckle image. Specifically, a plurality of pixels in the first image correspond to a plurality of pixels in the second image one by one. Assuming that the first image is P1, the second image is P2, the third image is P3, the processor 40 may subtract a pixel value of a pixel point P1_{i, j} in the first image from a pixel value of the pixel point P2i,j in the second image to obtain a pixel value of the pixel point P3_{i, j} in the third image, that is, P3_{i,j}=P2_{i,j}-P1_{i,j}, i∈N+, j∈N+. Then, the processor 40 may calculate a depth image based on the third image and the reference image, in which a number of frames of the second image, a number of frames of the third image, and a number of frames of the depth image are identical to each other. It may be understood that, since the difference value between the acquisition time of the first image and the acquisition time of the second image is small, the intensity of the ambient infrared lights in the first image is closer to that in the second image, and the precision of the third image calculated based on the first image and the second image is high, which facilitates to reduce the influence of ambient infrared lights on obtaining the depth image.

In some embodiments, the processor 40 may also add image types respectively for the third image and the depth image as shown in Table 2, so as to be helpful for distinguishing each data stream obtained after processing the acquired images.

**Table 2**

| stream_type | | |
|---|---|---|
| stream | light | |
| 0 | 1 | 1 |
| 1 | X | X |

When stream in Table 2 is 0, it indicates that the data stream at this time is images formed of the infrared lights and/or infrared laser, and when stream is 1, it indicates that the data stream at this time is depth images. When light is 11, it indicates to perform background subtraction processing where the portion of the acquired image formed of the ambient infrared lights is removed, the processor 40 may add the image type 011 for the data stream after the background subtraction processing to identify the data stream as a third image. When light is XX in which the X takes any value, the processor 40 may add the image type 1XX for the data stream after depth calculation to identify the data stream as a depth image.

In some embodiments, for the first image and the second image involved in the depth image calculation, the acquisition time of the first image may be before the acquisition time of the second image, and also may be behind the acquisition time of the second image, which will not be limited here.

In some embodiments, when the difference value between the acquisition time of the first image and the acquisition time of the second image is less than the predetermined difference value, the first image and the second image may be adjacent frames of images and may also be non-adjacent frames of images. For example, when the second working frequency is twice the first working frequency, the first image and the second image with the difference value smaller than the predetermined difference value are adjacent frames of images; when the multiple between the second working frequency and the first working frequency are greater than twice, for example, the second working frequency is triple the first working frequency, the first image and the second image with the difference value smaller than the predetermined difference value may be adjacent frames of images or non-adjacent frames of images (at this time, a frame of first image is also spaced between the first image and the second image).

In some embodiments, a number of frames of the first image involved in the depth image calculation may also be more than one. For example, when the second working frequency is triple the first working frequency, two frames of adjacent first images and one frame of the second image adjacent to the two frames of first images may be selected to calculate the third image. At this time, the processor 40 may first fuse the two frames of first images, for example, pixel values of the corresponding pixel points in the two frames of first images are added and averaged to obtain the fused first image, and the third image is calculated based on the fused first image and the frame of second image adjacent to the two frames of first images.

In some embodiments, the processor 40 may calculate a plurality of third images, for example, an (N+1)th-Nth frame of third image, an (N+3)th-(N+2)th frame of third image, an (N+5)th-(N+4)th frame of third image in FIG. 6. A plurality of depth images corresponding to the plurality of third images are calculated. In other embodiments, the processor may only calculate one frame of third image, and calculate one frame of depth image corresponding to one frame of third image. The number of frames of the third image may be determined according to a security level of an application scene. Specifically, when the security level of the application scene is relatively high, for example, a payment application scene with a high security level, the number of frames of the third image should be large, at this time, a plurality of frames of depth images need to be successfully matched with a depth template of the user to perform a payment action, so as to improve a payment security; when the security level of the application scene is relatively low, for example, in an application scene of performing portrait beautifying, the number of frames of the third image may be small, for example, one frame, at this time, one frame of depth image is enough for portrait beautifying, so that the computation amount and power consumption of the processor 40 may be reduced, and the speed of image processing may be increased.

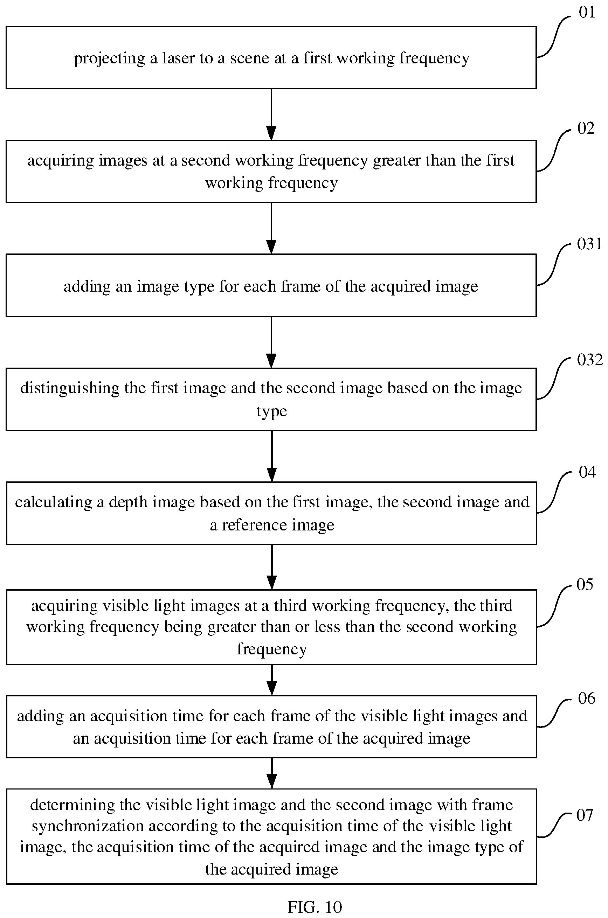

Referring to FIG. 10, in some embodiments, the method for acquiring an image further includes:
05: visible light images is acquired at a third working frequency, the third working frequency being greater than or less than the second working frequency;
06: an acquisition time is added for each frame of the visible light images and an acquisition time is added for each frame of the acquired image; and
07: the visible light image and the second image with frame synchronization are determined based on the acquisition time of the visible light image, the acquisition time of the acquired image and the image type of the acquired image.

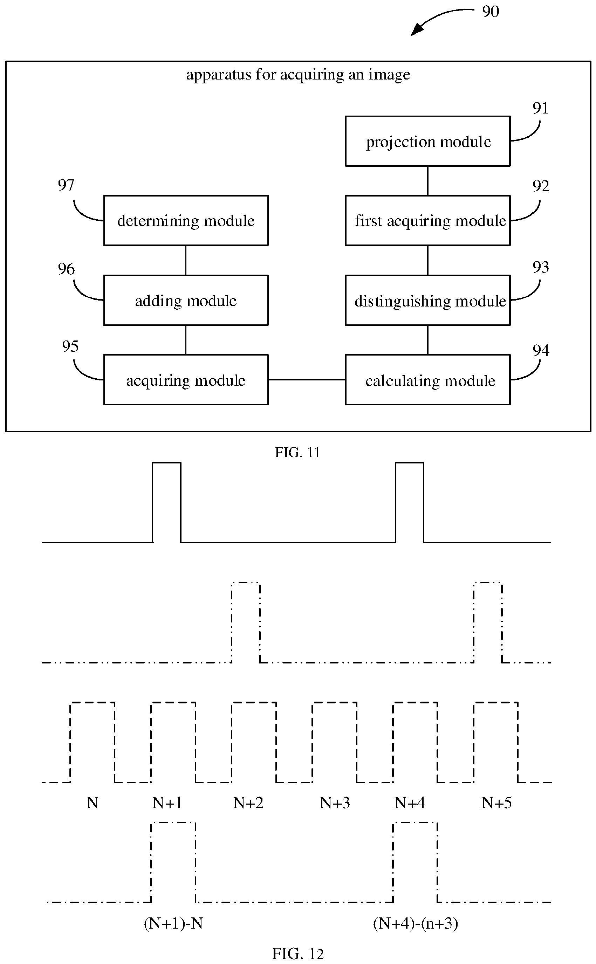

Referring to FIG. 11, in some embodiments, the apparatus for acquiring an image further includes an acquiring module 95, an adding module 96 and a determining module 97. Block 05 may be implemented by the acquiring module 95. Block 06 may be implemented by the adding module 96. Block 07 may be implemented by the determining module 97. That is, the acquiring module 95 may be configured to acquire visible light images at a third working frequency, the third working frequency being greater than or less than the second working frequency. The adding module 96 may be configured to add an acquisition time for each frame of the visible light images and an acquisition time for each frame of the acquired image. The determining module 97 may be configured to determine the visible light image and the second image with frame synchronization based on the acquisition time of the visible light image, the acquisition time of the acquired image and the image type of the acquired image. The acquiring module 95 is the visible light camera 30.

Referring to FIG. 3, in some embodiments, block 05 may be implemented by the visible light camera 30. Block 06 and block 07 may be implemented by the processor 40. That is, the visible light camera 30 may be configured to acquire visible light images at a third working frequency, the third working frequency being greater than or less than the second working frequency. The processor 40 may be configured to add an acquisition time for each frame of visible light image and an acquisition time for each frame of acquired image and determine the visible light image and the second image with frame synchronization based on the acquisition time of the visible light image, the acquisition time of the acquired image and the image type of the acquired image.

In some application scenes, for example, in an application scene of performing three-dimensional modeling on objects in a scene, three-dimensional modeling may be achieved by acquiring the depth information of the object in the scene through the depth camera 10, and acquiring color information of the object in the scene through the visible light camera 30. At this time, the processor 40 needs to enable the depth camera 10 to acquire a depth image and enable the visible light camera 30 to acquire visible light images.

If the working frequency of the image collector 12 is the same as the working frequency of the visible light camera 30, that is, both the image collector 12 and the visible light camera 30 work at a second working frequency. The processor 40 may send an image acquisition instruction to the image collector 12 via the I2C bus. After the image collector 12 receives the image acquisition instruction, the image collector 12 is synchronized with the visible light camera 30 through sync signals, in which the sync signal controls to enable the visible light camera 30 to acquire the visible light image, so as to achieve hardware synchronization of the image collector 12 and the visible light camera 30. At this time, the number of frames of the acquired image is consistent with the number of frames of the visible light image, and each frame of the acquired image corresponds to each frame of the visible light images.

However, when the working frequency of the image collector 12 is different from the visible light camera 30, that is, when the image collector 12 works at a second working frequency, and the visible light camera 30 works at a third working frequency not equal to the second working frequency, hardware synchronization of the image collector 12 and the visible light camera 30 may not be achieved. At this time, the processor 40 needs to implement synchronization of the image collector 12 and the visible light camera 30 in a software synchronization manner. Specifically, the processor 40 sends an image acquisition instruction to the image collector 12 via an I2C bus connected to the image collector 12, and sends the image acquisition instruction to the visible light camera 30 via an I2C bus connected to the visible light camera 30. Each time the processor 40 receives a frame of acquired image, an image type is added for each frame of acquired image, and an acquisition time is also added for each frame of acquired image. And, each time the processor 40 receives a frame of visible light image, an acquisition time is added for each frame of visible light image. The acquisition time of the acquired image may be a start time, an end time, any time between the start time and the end time when each frame of the image is acquired by the image collector 12, etc.; the acquisition time of the visible light image may be a start time, an end time, any time between the start time and the end time when each frame of the visible light images is acquired by the visible light camera 30, etc. Then, when further processing is performed based on the depth image and the visible light image (such as three-dimensional modeling, performing portrait beautifying by means of depth information), the processor 40 may first determine visible light images and a second image with frame synchronization based on the acquisition time of the visible light image, the acquisition time of the acquired image and the type of the acquired image. The frame synchronization means that the difference value between the acquisition time of the second image and the acquisition time of the visible light image is less than a preset time difference value, and the acquisition time of the visible light image may be before or behind the acquisition time of the second image. Then, the processor 40 selects a first image based on the determined second image and further calculates a depth image based on the first image, the second image and a reference image. Finally, the processor 40 performs subsequent processing based on the depth image and the determined visible light image.

In some embodiments, the processor 40 may also add an acquisition time for each frame of depth image, determine visible light images and a depth image with frame synchronization based on the acquisition time of the visible light image and the acquisition time of the depth image, and finally perform subsequent processing on the visible light image and the depth image with frame synchronization. The acquisition time of each frame of depth image is an acquisition time of the second image corresponding to the frame of depth image.

Referring to FIG. 12, in some embodiments, the acquired image further includes an infrared image, and the infrared image is an image obtained from the image collector 12 acquiring infrared lights emitted by the floodlight 20. When the processor 40 adds an image type for each frame of acquired image, an image type is also added for the infrared image. In an example, the image type of the infrared image is as illustrated in Table 3:

**Table 3**

| stream_type | | |
|---|---|---|
| stream | light | |
| 0 | 1 | 0 |

Whenstream in Table 3 is 0, it indicates that the data stream at this time is images formed of the infrared lights and/or infrared laser. When light is 10, it indicates that the data stream at this time is acquired when the floodlight 20 projects infrared lights and the laser projector 11 does not project a laser. Then, when the processor 40 adds the image type 010 for the acquired image, the frame of the acquired image is identified as an infrared image.

In some application scenes, for example, in an application scene of achieving identity verification based on matching the depth image with the depth template and matching the infrared image with the infrared template, the image collector 12 needs to be used cooperatively with the floodlight 20 and the laser projector 11, and the image collector 12 may acquire a first image, a second image and an infrared image by time sharing. For example, as illustrated in FIG. 12, a solid line represents a timing of emitting a laser by the laser projector 11, a double dot dash line represents a timing of emitting infrared lights by the floodlight 20, a dotted line represents a timing of acquiring images by the image collector 12 and a number of frames of the acquired image, and a dot dash line represents a number of frames of acquiring a third image based on the first image and the second image. In FIG. 12, the solid line, the double dot dash line, the dotted line and the dot dash line are shown from top to bottom in sequence, the second working frequency being triple the first working frequency, and the second working frequency being triple a fourth working frequency. The processor 40 may monitor the working state of the floodlight 20 via the I2C bus in real time. Each time the processor 40 receives a frame of the acquired image from the image collector 12, the processor 40 first acquires an acquisition time of the acquired image, determines whether the working state of the floodlight 20 at the acquisition time of the acquired image is projecting infrared lights or not projecting infrared lights based on the acquisition time of the image, and adds an image type for the acquired image based on the determination result. The processor 40 may determine an infrared image and a second image with a difference value of the acquisition time smaller than a set difference value based on the acquisition time of the infrared image and the acquisition time of the second image subsequently, may further determine an infrared image and a depth image and perform identity verification with the infrared image and the depth image.

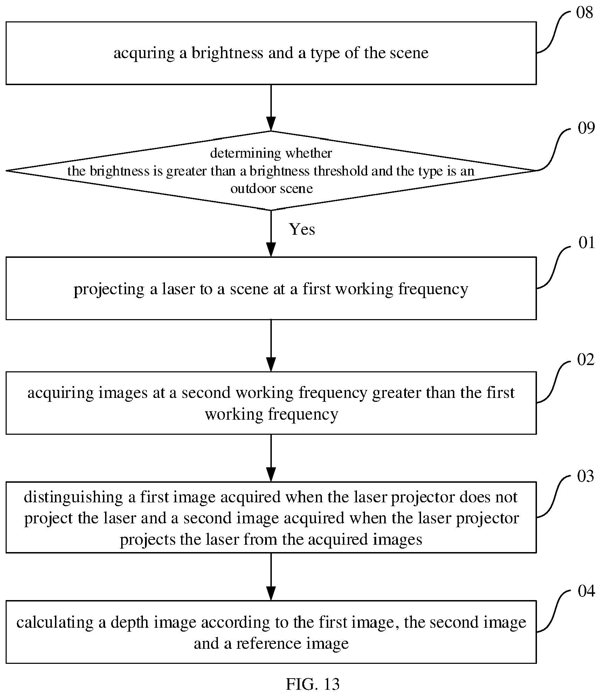

Referring to FIG. 13, in some embodiments, the method for acquiring an image further includes:
08: a brightness and a type of the scene are acquired;
09: it is determined whether the brightness is greater than a brightness threshold and the type is an outdoor scene;
01: if yes, execute the step of projecting, at a first frequency, a laser to a scene.

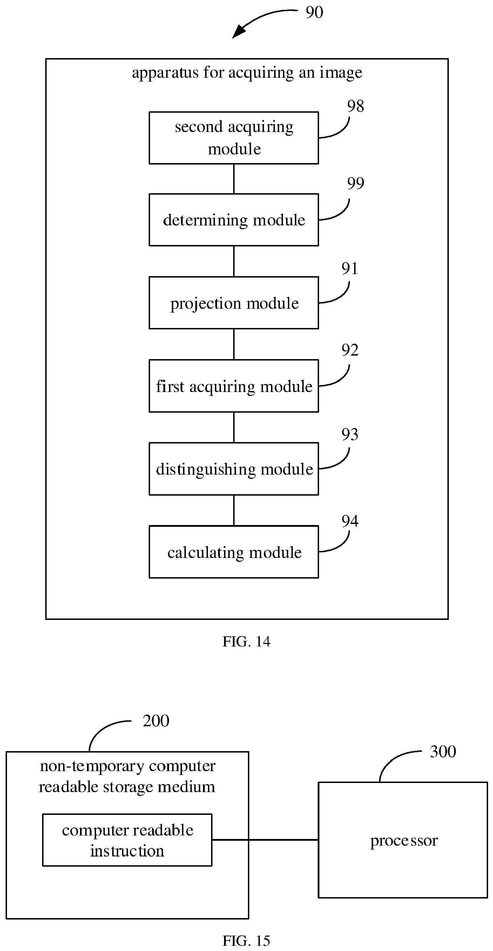

Referring to FIG. 14, in some embodiments, the apparatus 90 for acquiring an image further includes a second acquiring module 98 and a determining module 99. Block 08 may be implemented by the second acquiring module 98. Block 09 may be implemented by the determining module 99. That is, the second acquiring module 98 may be configured to acquire a brightness and a type of the scene. The determining module 99 may be configured to determine whether the brightness is greater than a brightness threshold and the type is an outdoor scene. The projection module 91 may be configured to project, at a first frequency, a laser to a scene when the brightness is greater than a brightness threshold and the type is an outdoor scene.

Referring to FIG. 3, in some embodiments, block 08 and block 09 may be implemented by the processor 40. That is, the determining module 40 may be configured to acquire a brightness and a type of the acquired scene, and determine whether the brightness is greater than a brightness threshold and the type is an outdoor scene. The laser projector 11 may be configured to project, at a first frequency, a laser to a scene when the brightness is greater than a brightness threshold and the type is an outdoor scene.

Specifically, the brightness of the scene may be obtained by analyzing the image acquired by the image collector 12 or the visible light image acquired by the visible light camera 30; or, the brightness of the scene may be directly detected by a light sensor, and the processor 40 reads the detected signals from the light sensor to obtain the brightness of the scene. The type of the scene may be obtained by analyzing the image acquired by the image collector 12 or the visible light image acquired by the visible light camera 30, for example, analyzing the object in the acquired image or the visible light image acquired by the visible light camera 30 to determine whether the type of the scene is an outdoor scene or an indoor scene; the type of the scene may also be determined directly based on geographic locations. Specifically, the processor 40 may acquire the positioning result of the global positioning system on the scene, and may further determine the type of the scene based on the positioning result. For example, if the positioning result is a certain office building, the scene is an indoor scene; if the positioning scene is a certain park, the scene is an outdoor scene; if the positioning scene is a certain street, the scene is an outdoor scene, etc.

It may be understood that when the brightness of the scene is relatively high (for example, the brightness is greater than a brightness threshold), the proportion of the ambient infrared lights in the acquired image may be large, and the influence on identification of speckles may be great. At this time, the interference of the ambient infrared lights needs to be removed. However, when the brightness of the scene is relatively low, the proportion of the ambient infrared lights in the acquired image is small, and the influence on the identification of speckles is small, which may be ignored. At this time, the image collector 12 and the laser projector 11 may work at the same working frequency, and the processor 40 calculates a depth image directly based on the image (that is, a second image) acquired by the image collector 12 and the reference image. In addition, a high brightness of the scene may be caused by the strong indoor lights. Since the lights do not include infrared lights and do not greatly affect the identification of speckles, the image collector 12 and the laser projector 11 work at the same working frequency, and the processor 40 calculates a depth image directly based on the image (that is, a second image) acquired by the image collector 12 and the reference image. In this way, the working frequency of the image collector 12 may be reduced, and the power consumption of the image collector 12 may be reduced.

Of course, in some embodiments, the method for acquiring an image may also determine whether to perform block 01 only based on the brightness of the scene. Specifically, the processor 40 only acquires the brightness of the scene and determines whether the brightness of the scene is greater than a brightness threshold, and the laser projector 11 projects a laser to the scene at the first working frequency when the brightness is greater than a brightness threshold.

In some embodiments, the processor 40 may further add status information for each data stream. In an example, as illustrated in Table 4:

**Table 4**

| stream_type | | | status |
|---|---|---|---|
| stream | light | | valid |
| 0 | 0 | 0 | 0 |
| 0 | 0 | 1 | 0 |
| 0 | 1 | 0 | 0 |
| 0 | 1 | 1 | 1 |
| 1 | X | X | 1 |
| 1 | X | X | 0 |

When status is 0, it indicates that background subtraction processing is not performed on the data stream; when status is 1, it indicates that background subtraction processing is performed on the data stream. In Table 4, a first image is indicated by 0000; a second image is indicated by 0010; an infrared image acquired by the image collector 12 when the floodlight 20 is open is indicated by 0100; a third image is indicated by 0111; a depth image after background subtraction processing is indicated by 1XX1; a depth image without background subtraction processing is indicated by 1XX0. In this way, the status information is added for each data stream to facilitate the processor 40 to distinguish whether background subtraction processing is performed on each data stream.

In some embodiments, the processor 40 includes a first storage area, a second storage area and a logic subtraction circuit, the logic subtraction circuit being connected to both the first storage area and the second storage area. The first storage area is configured to store a first image, the second storage area is configured to store a second image, and the logic subtraction circuit is configured to process the first image and the second image to obtain a third image. Specifically, the logic subtraction circuit reads the first image from the first storage area, reads the second image from the second storage area, and performs subtraction processing on the first image and the second image to obtain a third image after the first image and the second image are acquired. The logic subtraction circuit is further connected to a depth calculating module (for example, may be an integrated circuit ASIC specifically configured for calculating a depth) in the processor 40 and sends the third image to a depth calculating module, and the depth calculation module calculates a depth image based on the third image and the reference image.

Referring to FIG. 14, the disclosure further provides a non-transitory computer readable storage medium 200 including computer readable instructions. When the computer readable instructions are executed by a processor 300, the processor 300 is caused to execute the method for acquiring an image as described in any one of the above embodiments. The processor 300 may be a processor 40 in FIG. 1.

For example, referring to FIG. 4, when the computer readable instructions are executed by the processor 300, the processor 300 is caused to execute the following steps:
01: a laser is projected to a scene at a first working frequency;
02: images are acquired at a second working frequency greater than the first working frequency;
03: a first image acquired when the laser projector does not project the laser and a second image acquired when the laser projector 11 projects the laser are distinguished from the acquired images; and
04: a depth image is calculated based on the first image, the second image and a reference image.

For another example, referring to FIG. 8, when the computer readable instructions are executed by the processor 300, the processor 300 is caused to execute the following steps:
031: an image type is added for each frame of the acquired image; and
032: the first image is distinguished from the second image based on the image type.

In the description of the disclosure, descriptions with reference to terms "an embodiment", "some embodiments", "example embodiment", "an example", "example", "specific example" or "some examples" mean specific features, structures, materials or characteristics described in combination with the embodiment or example are included in at least one embodiment or example of the present disclosure. The schematic representations of the above terms do not have to be the same embodiment or example. Moreover, the specific features, structures, materials or characteristics described may be combined in any one or more embodiments or examples in a suitable manner. Furthermore, the different embodiments or examples described in the specification, as well as features of the different embodiments or examples, may be combined by those skilled in the art without a contradiction.

Any process or method described in the flowchart or otherwise described herein may be understood as representing one or more modules, segments, or portions of codes of executable instructions for implementing the steps of specific logical functions or processes, and the scope of the embodiments of the present disclosure includes additional implementations, in which the functions may be executed not in the shown or discussed sequence, including in a substantially simultaneous manner or in a reverse sequence, which will be appreciated by those skilled in the art the embodiments of the disclosure belong to.

Even though embodiments of the disclosure have been illustrated and described above, it may be understood that, the above embodiments are exemplary and cannot be understood as limitations to the disclosure, various changes, modifications, substitutions and variations may be made by those skilled in the art to these embodiments without departing from the principles and spirit of the disclosure.

## Claims

1. A method for acquiring an image, applied to an electronic device comprising a depth camera, the depth camera comprising a laser projector, the method comprising:
projecting, at a first frequency, a laser to a scene;
acquiring, at a second working frequency greater than the first working frequency, images;
distinguishing a first image acquired when the laser projector does not project the laser and a second image acquired when the laser projector projects the laser from the acquired images; and
calculating a depth image based on the first image, the second image and a reference image.

2. The method as claimed in 1, wherein distinguishing the first image acquired when the laser projector does not project the laser and the second image acquired when the laser projector projects the laser from the acquired images, comprises:
adding an image type for each frame of the acquired image; and
distinguishing the first image and the second image based on the image type.

3. The method as claimed in 2, wherein adding the image type for each frame of the acquired image comprises:
determining a working state of the laser projector at an acquisition time based on the acquisition time of each frame of the acquired image; and
adding the image type for each frame of the acquired image based on the working state.

4. The method as claimed in 2, wherein calculating the depth image based on the first image, the second image and the reference image comprises:
calculating a third image based on the first image and the second image, a difference value between an acquisition time of the first image and an acquisition time of the second image being less than a predetermined difference value; and
calculating the depth image based on the third image and the reference image.

5. The method as claimed in 2, further comprising:
acquiring, at a third working frequency, visible light images, the third working frequency being greater than or less than the second working frequency;
adding an acquisition time for each frame of the visible light images and an acquisition time for each frame of the acquired images; and
determining the visible light image and the second image with frame synchronization based on the acquisition time of the visible light image, the acquisition time of the acquired image and the image type of the acquired image.

6. An apparatus for acquiring an image, applied to an electronic device, wherein, the electronic device comprising a depth camera, the depth camera comprising a laser projector, the apparatus comprising:
a projection module, configured to project, at a first frequency, a laser to a scene;
a first acquiring module, configured to acquire, at a second working frequency greater than the first working frequency, images;
a distinguishing module, configured to distinguish a first image acquired when the laser projector does not project the laser and a second image acquired when the laser projector projects the laser from the acquired images; and
a calculating module, configured to calculate a depth image based on the first image, the second image and a reference image.

7. An electronic device, comprising a depth camera and a processor, the depth camera comprising a laser projector and an image collector;
the laser projector being configured to project, at a first frequency, a laser to a scene;
the image collector being configured to acquire, at a second working frequency greater than the first working frequency, images;
the processor being configured to:
distinguish a first image acquired when the laser projector does not project the laser and a second image acquired when the laser projector projects the laser from the acquired images; and
calculate a depth image based on the first image, the second image and a reference image.

8. The electronic device as claimed in claim 7, wherein the processor is further configured to:
add an image type for each frame of the acquired image; and
distinguish the first image and the second image based on the image type.

9. The electronic device as claimed in claim 8, wherein the processor is further configured to:
determine a working state of the laser projector at an acquisition time based on the acquisition time of each frame of the acquired image; and
add the image type for each frame of the acquired image based on the working state.

10. The electronic device as claimed in claim 8, wherein the processor is further configured to:
calculate a third image based on the first image and the second image, a difference value between an acquisition time of the first image and an acquisition time of the second image being less than a predetermined difference value; and
calculate the depth image based on the third image and the reference image.

11. The electronic device as claimed in claim 8, wherein the electronic device further comprises a visible light camera configured to acquire, at a third working frequency, visible light images, the third working frequency being greater than or less than the second working frequency; and
wherein the processor is further configured to:
add an acquisition time for each frame of the visible light images and an acquisition time for each frame of the acquired image; and
determine the visible light image and the second image with frame synchronization based on the acquisition time of the visible light image, the acquisition time of the acquired image and the image type of the acquired image.

12. A non-transitory computer readable storage medium having computer readable instructions, when executed by a processor, the processor is caused to execute the method of any of claims 1 to 5.
